(19) Europäisches Patentamt
European Patent Office
Office européen des brevets

(11) Veröffentlichungsnummer : **0 039 663**
**B1**

(12) # EUROPÄISCHE PATENTSCHRIFT

(45) Veröffentlichungstag der Patentschrift : **28.08.85**

(51) Int. Cl.[4] : **C 08 G 18/67**, C 08 G 18/38

(21) Anmeldenummer : **81810167.7**

(22) Anmeldetag : **01.05.81**

(54) **Verfahren zur Herstellung vernetzter, ungesättigter Polymere und diese Polymere.**

(30) Priorität : **07.05.80 CH 3554/80**

(43) Veröffentlichungstag der Anmeldung : **11.11.81 Patentblatt 81/45**

(45) Bekanntmachung des Hinweises auf die Patenterteilung : **28.08.85 Patentblatt 85/35**

(84) Benannte Vertragsstaaten : **CH DE FR GB IT LI NL**

(56) Entgegenhaltungen :
**DE-A- 3 017 157**
**FR-A- 2 028 015**

(73) Patentinhaber : **CIBA-GEIGY AG**
**Postfach**
**CH-4002 Basel (CH)**

(72) Erfinder : **Haug, Theobald, Dr.**
**Untere Flühackerstrasse 12**
**D-4402 Frenkendorf (CH)**

**EP 0 039 663 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von vernetzten, ungesättigten Polymeren auf der Basis von Isocyanaten, Polyolen und β-Aminocrotonsäurederivaten, sowie die nach diesem Verfahren hergestellten Polymeren.

In der DE-OS 2 633 294 sind vernetzte, ungesättigte Blockpolyamide beschrieben. Daraus hergestellte Werkstoffe weisen gegenüber entsprechenden unvernetzten Polymeren eine verbesserte Dimensionsstabilität und grössere Resistenz gegenüber Lösungsmitteln auf.

Die Herstellung dieser Blockpolyamide erfolgt durch Vernetzung von Polymeren mit Enamin-Strukturen in der Polymerkette, wie sie durch Polykondensation von Bis-acetoacetamiden mit Dihydrazidverbindungen erhalten werden, mittels Polyisocyanaten. Die als Ausgangssubstanzen verwendeten ungesättigten Polymeren weisen Molekulargewichte zwichen 5'000 und 40'000 auf. Es handelt sich also um zähviskose Substanzen, deren Verarbeitung und Mischung mit Reaktionspartnern deshalb Schwierigkeiten bereiten. Die Umsetzung mit den Polyisocyanaten erfolgt daher entweder auf einem Kneter oder in Lösung.

Die Herstellung von Formkörpern unter Anwendung von Giesssverfahren ist gemäss der Lehre der DE-OS 2 633 294 nicht möglich.

Auffallend bei diesem bekannten Verfahren ist, dass vorwiegend mit einem Unterschuss an Polyisocyanaten umgesetzt wird. Eine Erhöhung der Polyisocyanatmenge, wie sie in der klassischen Polyurethan-Technik zwecks Vervesserung der technischen Eigenschaften der Endprodukte häufig angewandt wird, führt hier offensichtlich nicht zum Erfolg.

Polymere auf Isocyanat/Polyol-Basis sind beispielsweise von R. Kubens et al. in Kunststoffe *69,* (1979) 455-461 beschrieben. Polyurethane, welche als Isocyanat-Komponente ein aromatisches Isocyanat enthalten, zeichnen sich durch gute Wärmeformbeständigkeit und gute mechanische Eigenschaften aus. Da jedoch die Urethanbildung ausserordentlich rasch erfolgt, geliert die Masse frühzeitig, was wiederum zu ungünstig kurzen Verarbeitungszeiten führt. Polyurethane mit einer aliphatischen Isocyanat-Komponente ermöglichen längere Verarbeitungszeiten, zeigen jedoch eine niedrigere Wärmeformbeständigkeit. Schliesslich sind aus der DE-A-3 017 157 vernetzte, ungesättigte Polymere auf Polyisocyanat/ß-Aminocrotonsäurederivat-Basis, jedoch ohne Polyol-Komponente, bekannt.

Aufgabe der Erfindung ist, ein Verfahren zur Herstellung von vernetzten, ungesättigten Polymeren auf der Basis von Isocyanaten und Polyolen zu finden, bei dem die Vernetzung zwar über Polyisocyanate erfolgt, bei welchem aber unter güngstigeren rheologischen Verhältnissen gearbeitet wird, so dass ohne Schwierigkeiten auch das Giessverfahren angewandt werden kann. Die Aufgabe der Erfindung umfasst auch die Schaffung von neuen vernetzten, ungesättigten Polymeren, welche bessere Eingenschaften als die des Standes der Technik aufweisen.

Gegenstand der Erfindung ist ein Verfahren zur Herstellung von vernetzten, ungesättigten Polymeren, welches dadurch gekennzeichnet ist, dass man ein Gemisch, enthaltend im wesentlichen stöchiometrische Mengen eines Di- oder Polyisocyanats und eines Polyols, mit einem monomeren oder oligomeren β-Aminocrotonsäureester oder β-Aminocrotonsäurenitril oder β-Aminocrotonsäureamid umsetzt, wobei das Verhältnis der Isocyanat/β-Aminocrotonsäurederivat-Komponenten so gewählt wird, dass auf eine Molekülgruppe der Formel

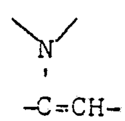

des jeweiligen β-Aminocrotonsäurederivates mindestens eine Isocyanatgruppe kommt.

Bevorzugt ist ein Verfahren, worin auf eine Molekülgruppe der Formel

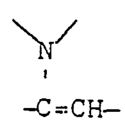

des jeweiligen β-Aminocrotonsäurederivates 1 bis 2 Isocyanatgruppen kommen.

Die Umsetzung kann bei Temperaturen von 20 °C bis 200 °C, vorzugsweise von 50 bis 180 °C, erfolgen.

Als β-Aminocrotonsäureester werden bevorzugt solche der Formeln I bis III eingesetzt :

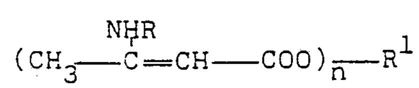

(I)

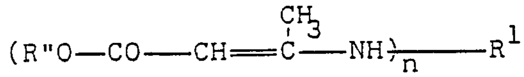

(II)

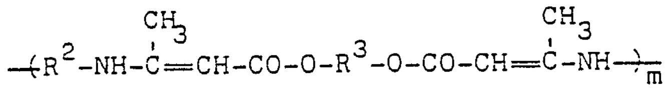

(III)

worin R ein Wasserstoffatom oder einen gesättigten oder ungesättigten linearen, verzweigten oder cyclischen Kohlenwasserstoffrest mit 1 bis 9 C-Atomen, R″ einen gesättigten oder ungesättigten, linearen, verzweigten oder cyclischen Kohlenwasserstoffrest mit 1 bis 9 C-Atomen bedeuten, n eine der Zahlen 2, 3 oder 4 und m eine Zahl von 4 bis 15 sind, $R^1$ einen n-wertigen und $R^2$ und $R^3$ je einen 2-wertigen, gegebenenfalls Aetherbrücken oder COO-Gruppen enthaltenden, linearen, verzweigten oder cyclischen Kohlenwasserstoffrest mit 2 bis 20 C-Atomen oder einen zweiwertigen N-, O- oder S-Atome enthaltenden heterocyclischen Ring bedeuten, wobei $R^2$ und $R^3$ gleich oder verschieden sind.

R kann $C_1$-$C_9$-Alkyl, beispielsweise Methyl, Isopropyl, n-Butyl, 2-Aethylhexyl oder n-Nonyl, oder $C_3$-$C_9$-Alkenyl, z. B. Allyl, Methallyl oder 1-Octen-2-yl sein ; als cyclischer Kohlenwasserstoffrest R kommt z. B. Phenyl in Betracht.

Bevorzugt ist R Wasserstoff oder $C_1$-$C_4$ Alkyl, besonders bevorzugt Wasserstoff.

$R^1$ kann als 2-wertiger Rest ein 2-wertiger Alkylenrest mit 2 bis 20 C-Atomen wie z. B. Aethylen, Tetramethylen, Hexamethylen, 2,2-Dimethylpropylen, $-CH_2C(CH\text{-}3)_2-CH_2-OOC-C(CH_3)_2-CH_2-$, $-CH_2CH_2-O-CH_2CH_2-$ oder $-(CH_2CH_2-O)-_2CH_2CH_2-$ sein, oder einen cyclischen Kohlenwasserstoffrest, wie z. B. 1,4-Cyclohexylen, 1,4-Phenylen, p-Xylylen, oder die Gruppen

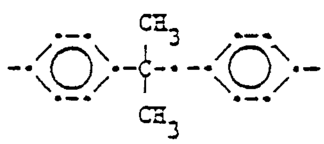

und

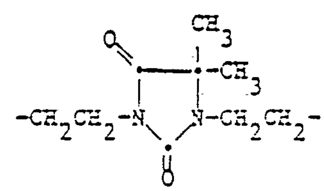

bedeuten.

$R^1$ kann als 3-wertiger Rest z. B. die Gruppe

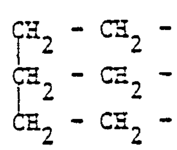

bedeuten und als 4-wertiger Rest z. B.

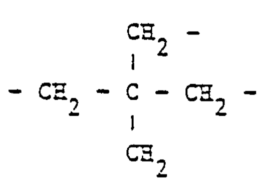

sein.

Bevorzugt ist $R^1$ ein 2-wertiger, gegebenenfalls Aetherbrücken oder COO-Gruppen enthaltender aliphatischer Rest, insbesondere Hexamethylen oder 2,2-Dimethylpropylen.

R″ kann $C_1$-$C_9$-Alkyl, beispielsweise Methyl, Isopropyl, n-Butyl, 2-Aethylhexyl oder n-Nonyl, oder $C_3$-$C_9$-Alkenyl, z. B. Allyl, Methallyl oder 1-Octen-2-yl, sein ; als cyclischer Kohlenwasserstoffrest bedeutet R′ z. B. Phenyl. Bevorzugt ist R′ $C_1$-$C_4$ Alkyl oder $C_2$-$C_4$ Alkenyl, besonders bevorzugt Methyl oder Allyl.

Besonders bevorzugt werden β-Aminocrotonsäureester der Formel I eingesetzt, insbesondere solche, in denen jeweils n die Zahl 2 und $R^1$ einen 2-wertigen, gegebenenfalls Aetherbrücken oder COO-Gruppen enthaltenden, aliphatischen Rest bedeuten, insbesondere Hexamethylen oder 2,2-Dimethylpropylen.

$R^2$ kann ein 2-wertiger Alkylrest mit 2-20 C-Atomen, wie z. B. Aethylen, Hexamethylen oder 2,4,4-Trimethylhexamethylen sein ; als cyclischer Kohlenwasserstoffrest kann $R^2$ z. B. o-, m- oder p-Phenylen, p-Xylylen oder die Gruppe ,

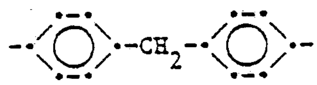

bedeuten. Bevorzugt ist $R^2$ ein 2-wertiger Alkylrest mit 2-9 C-Atomen, insbesondere 2,4,4-Trimethylhexamethylen.

$R^3$ kann einen 2-wertigen Alkylrest mit 2-20 C-Atomen bedeuten, welcher gegebenenfalls mit Aetherbrücken unterbrochen sein kann, z. B. Aethylen, Hexamethylen oder die Gruppe $-CH_2CH_2-O-CH_2CH_2-$; als cyclischer Kohlenwasserstoffrest kann $R^3$ z. B. 1,4-Cyclohexylen oder die Gruppe

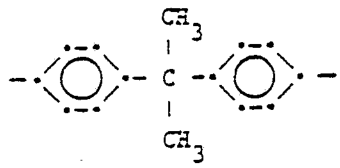

bedeuten. Bevorzugt ist $R^3$ ein 2-wertiger Alkylenrest mit 2-9 C-Atomen, insbesondere Tetramethylen.

Als ß-Aminocrotonsäurenitrile werden bevorzugt solche der Formeln IV bis VI

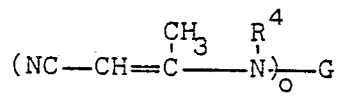
(IV)

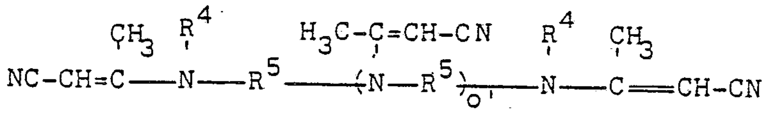
(V)

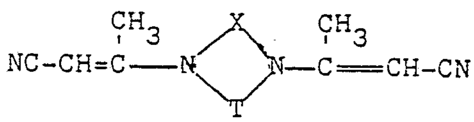
(VI)

eingesetzt, in denen $R^4$ ein Wasserstoffatom, Alkyl mit 1 bis 6 C-Atomen, Cycloalkyl mit 5 oder 6 C-Atomen oder Aryl mit 6 bis 10 C-Atomen, o' eine der Zahlen 1, 2 oder 3, o eine der Zahlen 2 oder 3, G einen o-wertigen organischen Rest mit 2 bis 30 C-Atomen und $R^5$ einen 2-wertigen aromatischen oder aliphatischen Rest mit bis zu 30 C-Atomen bedeuten und X und T solche organischen Reste darstellen, welche mit den beiden N-Atomen einen 5- oder 6-gliederigen heterocyclischen Ring bilden.

$R^4$ kann als $C_1$-$C_6$ Alkyl beispielsweise Methyl, Aethyl, Isopropyl, n-Butyl oder n-Hexyl bedeuten.

$R^4$ kann als Cycloalkyl beispielsweise Cyclopentyl oder Cyclohexyl sein.

$R^4$ kann als Aryl beispielsweise Phenyl sein.

Bevorzugt ist $R^4$ Wasserstoff.

G kann einen 2-wertigen Rest bedeuten, der z. B. ein gegebenenfalls mit O- oder S-Brücken unterbrochener und gegebenenfalls mit $C_1$-$C_4$ Alkoxy substituierter aliphatischer Rest ist, welcher verzweigt oder geradkettig sein kann. G kann ferner $C_5$-$C_8$ Cycloalkylen oder die Gruppe

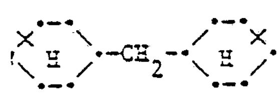

bei dem die Ringe gegebenenfalls mit $C_1$-$C_4$ Alkyl substituiert sind, bedeuten, insbesondere jedoch 1,4-Cyclohexylen. Als aromatischer Rest kann G $C_6$-$C_{10}$ Arylen sein, wie 1,3- oder 1,4-Phenylen oder 1,5-Naphthylen, oder ein bicyclischer Rest der Formel

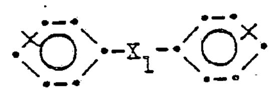
(A)

worin $X_1$ für $-O-$, $-CH_2-$, $-SO_2-$

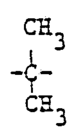 , 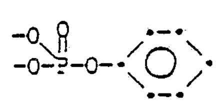

oder

—COO— $(CH_2)_{2-6}$—OOC— steht, wobei die Phenylringe gegebenenfalls mit je einem Chlor substituiert sein können. G kann auch einen aromatisch-aliphatischen Rest, wie m- oder p-Xylylen, bedeuten. Ferner kann G einen zweiwertigen 5- oder 6-gliedrigen N-Heterocyclus bedeuten, welcher benzokondensiert und/oder am N-Atom mit $C_1$-$C_4$ Alkyl oder Phenyl substituiert sein kann.

Bevorzugt ist G als ein 2-wertiger Rest ein aliphatischer, ein aromatischer oder aromatischaliphatischer Rest, insbesondere Hexamethylen oder

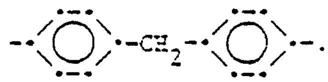

G kann einen 3-wertigen Rest bedeuten, wobei es sich um einen gegebenenfalls mit O-Brücken unterbrochenen $C_2$-$C_{30}$ aliphatischen Rest, um ein- oder mehrkerniges Aryl, wie Benzoltriyl oder Naphthalintriyl, oder um bicyclisches Aryl der Formel B

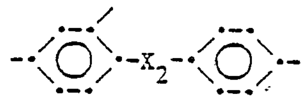 (B)

handelt, worin $X_2$ für —O—, —$CH_2$—, —$SO_2$—,

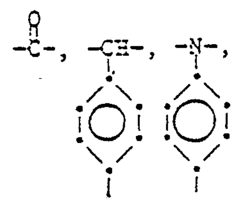

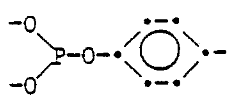 ,

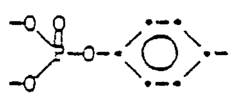 oder 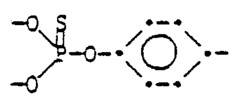

steht, wobei die Phenylringe gegebenenfalls je mit einer $C_1$-$C_4$ Alkylgruppe substituiert sein können, oder es kann sich um einen 5- oder 6-gliedrigen N-Heterocyclus handeln.

Bevorzugt ist G als ein 3-wertiger Rest ein aromatischer Rest, insbesondere ein monocyclischer Rest.

$R^5$ kann als 2-wertiger aliphatischer Rest mit 2-30 C-Atomen, z. B. Aethylen, Trimethylen oder Tetramethylen bedeuten. Bevorzugt ist ein 2-wertiger Alkylrest mit 2-6 C-Atomen.

$R^5$ kann als aromatischer Rest z. B. p-Phenylen sein.

X und T können mit den beiden N-Atomen z. B. einen Piperazin-, Hexahydropyrimidin- oder Imidazolidin-Ring bilden. Bevorzugt ist Piperazin.

Besonders bevorzugt werden β-Aminocrotonsäurenitrile der Formel IV eingesetzt, in der jeweils n die Zahl 2 und G einen 2-wertigen aliphatischen, aromatischen oder aromatisch- aliphatischen Rest bedeuten, insbesondere Hexamethylen oder

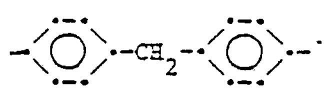

Als β-Aminocrotonsäureamide werden bevorzugt solche der Formeln VII bis IX

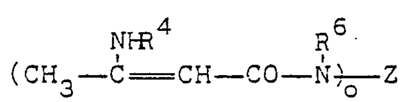 (VII)

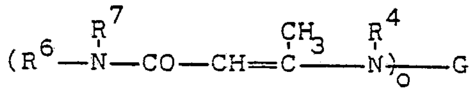

(VIII)

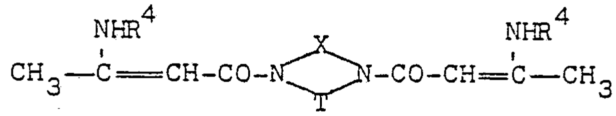

(IX)

eingesetzt, in denen $R^4$, $R^6$ und $R^7$ unabhängig voneinander ein Wasserstoffatom, Alkyl mit 1 bis 6 C-Atomen, Cycloalkyl mit 5 bis 6 C-Atomen oder Aryl mit 6 bis 10 C-Atomen, o eine der Zahlen 2 oder 3 und G und Z unabhängig voneinander einen o-wertigen organischen Rest mit 2 bis 30 C-Atomen bedeuten und X und T solche organischen Reste darstellen, welche mit den beiden N-Atomen einen 5- oder 6-gliedrigen heterocyclischen Ring bilden.

Beispiele und Bevorzugungen für die Bedeutung von G, $R^4$, X und T wurden bereits für die Formeln IV und VI gegeben. Z kann die gleiche Bedeutung haben wie G. Bevorzugt ist Z ein 2-wertiger aliphatischer Rest, insbesondere 2,2,5-Trimethylhexamethylen.

$R^6$ und $R^7$ können die gleiche Bedeutung haben wie $R^4$. Bevorzugt sind $R^4$ und $R^6$ Wasserstoff. Bevorzugt ist $R^7$ $C_1$-$C_4$-Alkyl.

Besonders bevorzugt werden β-Aminocrotonsäureamide der Formel VII eingesetzt, in der jeweils $R^4$ und $R^6$ ein Wasserstoffatom, o die Zahl 2 und Z einen 2-wertigen aliphatischen Rest bedeuten, insbesondere 2,2,5-Trimethyl-hexamethylen.

Grundsätzlich sind erfindungsgemäss alle heute in der Polyurethantechnik gebräuchlichen Di- und Polyisocyanate anwendbar. Es kommen also aliphatische, cycloaliphatische und aromatische in Frage, wie beispielsweise Diisocyanate von 2-wertigen Alkylresten mit 4-9 C-Atomen, z. B. Tetra- und Hexamethylendiisocyanat, Isomerengemische von 2,2,4- und 2,4,4-Trimethylhexamethylendiisocyanat, trimerisiertes Hexamethylendiisocyanat, 3-Isocyanatomethyl-3,5,5-trimethyl-cyclohexylisocyanat (« Isophorondiisocyanat »), Arylendiisocyanate, die gegebenenfalls mit $C_1C_4$-Alkyl substituiert sein können, wie m- und p-Phenylendiisocyanat, Naphthylendiisocyanate, Diphenylmethan-4,4'-diisocyanat, Methylphenylendiisocyanate, wie 2,4- und 2,6-Methylphenylendiisocyanat und ihre Gemische, Di- und Triisopropyalbenzoldiisocyanate und Triphenylmethantriisocyanate, Tri-(p-isocyanatophenyl)-thiophosphat, Tri-(p-isocyanatophenyl)-phosphat, Aralkyldiisocyanate, wie 1-(Isocyanatophenyl) äthylisocyanat oder m- und p-Xylylendiisocyanat, sowie auch durch verschiedene Gruppen, wie beispielsweise durch $C_1$-$C_4$ Alkoxy-, Phenoxy, (wobei das Phenyl mit $C_1$-$C_4$ Alkyl substituiert sein kann), $NO_2$- oder durch Cl-substituierte Polyisocyanate der oben aufgezählten Typen, ferner Polyphenylpolymethylenpolyisocyanat, welches durch Anilin-Formaldehyd-Kondensation und anschliessende Phosgenierung gewonnen wird ; ferner die Umsetzungsprodukte der oben erwähnten Isocyanate mit einem Unterschuss an Polyhydroxylverbindungen, wie beispielsweise Trimethylolpropan, Hexantriol, Glycerin und Butandiol oder auch Wasser. Ausserdem können hier die beispielsweise durch Phenole oder Bisulfit verkappten Polyisocyanate, sowie polymerisierte Isocyanate mit Isocyanuratring-Struktur genannt werden. Bevorzugt sind Hexamethylendiisocyanat, Diphenylmethan-4,4'-diisocyanat oder Toluylen-diisocyanat.

Als Polyole können alle in der Polyurethantechnik gebräuchliche Polyhydroxyverbindungen mit einem hohen OH-Gehalt eingesetzt werden.

Bevorzugt sind aliphatische Polyole, wie z. B. Polyätherpolyole mit einem OH-Aequivalentgewicht von 90 bis 250.

Besonders bevorzugt sind verzweigte aliphatische Polyätherpolyole mit einem Hydroxyläquivalentgewicht von 105 oder 150.

Als Beispiele für geeignete Polyole seien genannt : Polyoxypropylenglykol, Polyoxypropylen/Glycerin-Addukte, Polyoxypropylen/Trimethylolpropan-Addukte, Polyoxypropylen-oxyäthylen/Trimethylolpropan-Addukte, Polyoxypropylen/1,2,6-Hexantriol-Addukte, Polyoxypropylen/Pentaerythritol-Addukte, Polyoxypropylen/Sorbitol-Addukte, wobei das durchschnittliche Molgewicht der Polyole bevorzugt 500-5 000 beträgt.

Die β-Aminocrotonsäureester der Formeln I bis III gehören zu einer bekannten Verbindungsklasse und lassen sich entsprechend den in « Liebigs Annalen », Band 213, Seite 171 (1882) oder in « Berichten der Deutschen Chemischen Gesellschaft », Band *20*, Seite 247 (1887) beschriebenen Verfahren herstellen. Dabei werden die entsprechenden β-Ketocarbonsäureester zur Herstellung der Verbindungen der Formel I mit Ammoniak oder Monoaminen, zur Herstellung der Verbindungen der Formel II mit Di- Tri- oder Tetraminen und zur Herstellung der Verbindungen der Formel III mit Diaminen umgesetzt. Die β-Aminocrotonsäureester der Formel I und II sind im übrigen auch bereits in dem US-Patent 4 089 845 ausführlich beschrieben worden.

Als Beispiele für Verbindungen der Formel I seien genannt : 1,2-Aethylenglykol-bis-(β-aminocrotonsäureester), 2,2-Dimethylpropylenglykol-1,3-bis-(β-aminocrotonsäureester), 1,4-Tetramethylenglykol-bis-(β-aminocrotonsäureester), 1,6-Hexamethylenglykol-bis-(β-aminocrotonsäureester), α,ω-Diäthylenglykol-bis-(β-aminocrotonsäureester), α,ω-Triäthylenglykol-bis-(β-aminocrotonsäureester), 1,4-Cyclohe-

xandiol-bis-(β-aminocrotonsäureester), Hydrochinon-bis-(β-aminocrotonsäureester), 2,2-Bis-(4-hydroxyphenyl) propan-bis-(β-aminocrotonsäureester), α,α'-Dihydroxy-p-xylylen-bis-(β-aminocrotonsäureester), Bis-(β-hydroxyäthyl)-5,5-dimethylhydantoin-bis-(β-aminocrotonsäureester), 1,2-Aethylenglykol-bis-(β-methylaminocrotonsäureester), 1,4-Tetramethylenglykol-bis-(β-butylaminocrotonsäureester), 2,2-Bis-(4-hydroxyphenyl) propan-bis-(β-anilinocrotonsäureester), Trimethylolpropan-tris-(β-aminocrotonsäureester), Pentaerythrit-tetra-(β-aminocrotonsäureester).

Als Beispiele für Verbindungen der Formel II seien genannt : N,N'-Aethylen-bis-(β-aminocrotonsäureethylester), N,N'-Tetramethylen-bis-(β-aminocrotonsäureäthylester), N,N'-(2,4,4-Trimethyl)-hexamethylen-bis-(β-aminocrotonsäuremethylester), N,N'-p-Phenylen-bis-(β-aminocrotonsäuremethylester), N,N'-4,4'-Diphenylenmethan-bis-(β-aminocrotonsäuremethylester). N,N'-m-Xylylen-bis-(β-aminocrotonsäurephenylester), N,N'-[Bis-(β-aminocrotonsäuremethylester)]-1,3-di-(γ-aminopropyl)-5,5-dimethylhydantoin, N,N'-4,4'-Dicyclohexylmethan-bis-(β-aminocrotonsäureäthylester).

Die β-Aminocrotonsäureester der Formel III können hergestellt sein aus Bis-acetessigestern wie z. B. 1,2-Aethylenglykol-bis-(acetessigester), 1,6-Hexamethylenglykol-bis-(acetessigester), α,ω-Diäthylenglykol-bis-(acetessigester), 1,4-Cyclohexandiol-bis-(acetessigester), 2,2-Bis-(4-hydroxyphenyl)-propan-bis-(acetessigester) und Diaminen, beispielsweise Aethylendiamin, Hexamethylendiamin, 2,4,4-Trimethylhexamethylendiamin, p-, m- oder o-Phenylendiamin, 4,4'-Diaminodiphenylmethan, p-Xylylendiamin. Die Substanzen der Formel III können entweder aus je einen Bis-Acetessigester und einem Diamin hergestellt werden, oder aus Gemischen von ihnen.

Die β-Aminocrotonsäurenitrile der Formeln IV bis VI stellen ebenfalls bekannte Verbindungen dar und können beispielsweise nach den in « Journal für praktische Chemie », Band 78 (1908), Seite 497, oder in « Berichte der Deutschen Chemischen Gesellschaft », Band 60 (1927), Seite 1826, beschriebenen Verfahren hergestellt werden, indem man das unsubstituierte β-Aminocrotonsäurenitril mit Di- oder Polyaminen der Formeln IVa bis VIa

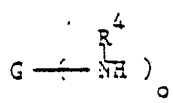

(IVa)

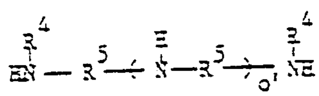

(Va)

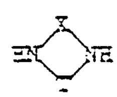

worin G, $R^4$, $R^5$, o, o', X und T die gleiche Bedeutung wie in den Formeln IV bis VI haben, unter Abspaltung von Ammoniak, umsetzt.

Als Beispiele für Diamine der Formel IVa seien genannt : Aethylendiamin, Tetramethylendiamin, Hexamethylendiamin, 2,4,4-Trimethylhexamethylendiamin, Octamethylendiamin, Decamethylendiamin, Dodecamethylendiamin, 2,2,-Dimethyl-1,3-diaminopropan, 2,5-Dimethyl-1,5-diaminoheptan, 2,5-Dimethyl-1,6-diamino-hexan, 2,5-Dimethyl-1,7-diaminoheptan, 3,3,5-Trimethyl-1,6-diaminohexan, 1,2-Bis-(3-aminopropoxy)-äthan, 3-Methoxy-1,6-diaminohexan, $NH_2(CH_2)_3O(CH_2)_3NH_2$, $H_2N—C_2H_4—S—C_2H_4—NH_2$, 4,4'-Diamino-dicyclohexylmethan, 1,4-Diaminocyclohexan, m-Phenylendiamin, p-Phenylendiamin, 1,4-Diaminodiphenylmethan, 3,3'-Dichlor-4,4'-diaminodiphenylmethan, Bis-(4-aminophenyl)-2,2-propan, 4,4'-Diamino-diphenyläther, 4,4'-Diaminodiphenylsulfon, 1,5-Diaminonaphthalin, m-Xylylendiamin, p-Xylylendiamin, 1,3-Bis-(γ-aminopropyl)-5,5-dimethyl-hydantoin, 4,4'-Diaminotriphenylphosphat, 3-Aminomethyl-3,5,5-trimethylcyclohexylamin (« Isophorondiamin »), 4,4'-Methylen-bis-(2-methylcyclohexylamin), 4-Amino-3-aminomethylpiperidin, am N-Atom mit $C_1$-$C_4$ Alkyl substituierte 3-Amino-4-aminomethylpyrrolidine, wie beispielsweise 1-Methyl-3-amino-4-aminomethylpyrrolidin, Phenylindoldiamin, 2,5-Di-(ω-aminoalkyl)-pyrazin mit 1-4 C-Atomen im Alkylrest, Bis-(p-amino-benzoesäureester) oder Bis-(anthranilsäureester) von $C_2$-$C_6$ aliphatischen Diolen sowie disekundäre Diamine, wie N,N'-Di-(cyclohexyl)-hexamethylendiamin oder N,N'-Di-(cyclopentyl)-hexamethylendiamin.

Als Beispiele für dreiwertige Amine der Formel IVa seien genannt : 1,2,4-Triaminobenzol, 1,3,5-Triaminobenzol, 2,4,6-Triaminotoluol, 2,4,6-Triamino-1,3,5-trimethylbenzol, 1,3,7-Triaminonaphtalin, 2,4,4'-Triaminodiphenyl, 3,4,6-Triaminopyridin, 2,4,4'-Triaminophenyläther, 2,4,4'-Triaminodiphenylmethan, 2,4,4'-Triaminodiphenylsulfon, 2,4,4'-Triaminobenzophenon, 2,4,4'-Triamino-3-methyldiphenylmethan, N,N,N-Tri(4-aminophenyl)-amin, Tri-(4-aminophenyl)-methan, Tri-(4-aminophenyl)-phosphat sowie

$O = P(O—CH_2—CH_2—NH_2)_3$,

$CH_2-O-C_3H_6-NH_2$
$|$
$CH_2-O-C_3H_6-NH_2$
$|$
$CH_2-O-C_3H_6-NH_2$,
$CH_3-CH_2-C(CH_2-O-C_3H_6-NH_2)_3$,

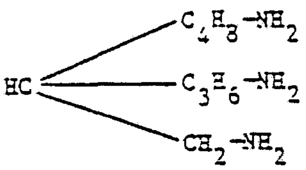

und 1,8-Diamino-4-aminomethyl-octan.

Als aliphatische Amine der Formel Va sind zum Beispiel die Dialkylentriamine und Trialkylentetramine geeignet, vorzugsweise solche mit einem 2 bis 6 Kohlenstoffatome enthaltenden 2-wertigen Alkylrest, wie zum Beispiel Diäthylentriamin, Triäthylentetramin, Dipropylentriamin, Tripropylentetramin oder Tritetramethylentetramin. Als aromatisches Amin eignet sich beispielsweise 4,4'-Diaminodiphenylamin.

Als Amine der Formel VIa seien Piperazin, Hexahydropyrimidin und Imidazolidin genannt.

Die β-Aminocrotonsäureamide der Formeln VII bis IX gehören ebenfalls zu einer bekannten Verbindungsklasse und lassen sich entsprechend den in « Liebigs Annalen », Band 213, Seite 171 (1882) oder in « Berichte der Deutschen Chemischen Gesellschaft », Band *20,* Seite 274 (1887) beschriebenen Verfahren herstellen. Dabei werden die entsprechenden β-Ketocarbonsäureamide zur Herstellung der Verbindungen der Formeln VII und IX mit Ammoniak oder Monoaminen und zur Herstellung der Verbindungen der Formel VIII mit Di-, Tri- oder Tetraminen umgesetzt.

Als Beispiele für Verbindungen der Formel VII seien genannt; N,N'-Bis-(β-aminocrotonyl)-äthylendiamin, N,N'-Bis-(β-aminocrotonyl)-hexamethylendiamin, N,N'-Bis-(β-aminocrotonyl)-2,2,5-trimethylhexamethylendiamin, N,N'-Bis-(β-aminocrotonyl)-dodecamethylendiamin, N,N'-Bis-(β-aminocrotonyl)-m-phenylendiamin, N,N'-Bis-(β-aminocrotonyl)-4,4'-diaminodiphenylmethan, N,N'-Bis-(β-aminocrotonyl)-3,3'-dichloro-4,4'-diaminodiphenylmethan, N,N'-Bis-(β-aminocrotonyl)-4,4'-diamino-3,3'-dimethyldicyclohexylmethan, N,N'-Bis-(β-aminocrotonyl)-1,4-diaminocyclohexan, N,N'-Bis-(β-aminocrotonyl)-p-xylylendiamin, N,N'-Bis-(β-aminocrotonyl)-1,3-di-(γ-aminopropyl)-5,5-dimethylhydantoin, N,N'-Bis-(β-methylaminocrotonyl)-äthylendiamin, N,N'-Bis-(β-anilinocrotonyl)-hexamethylendiamin, N,N'-Bis-(β-butylaminocrotonyl)-4,4'-diaminodiphenylmethan, N,N'-Bis-(β-butylaminocrotonyl)-4,4'-diamino-dicyclohexylmethan, N,N'-Bis-(β-cyclohexylaminocrotonyl)-1,4-diaminocyclohexan.

Als Beispiele für Verbindungen der Formel VIII seien genannt: N,N'-Aethylen-bis-(β-aminocrotonsäuremethylamid), N,N'-Hexamethylen-bis-(β-aminocrotonsäure-n-butylamid), N,N'-(2,4,4-Trimethyl)-hexamethylen-bis-(β-aminocrotonsäure-n-butylamid), N,N'-Tetramethylen-bis-(β-aminocrotonsäurediäthylamid), N,N'-p-Phenylen-bis-(β-aminocrotonsäureanilid), 4,4'-Bis-(β-aminocrotonsäuremethylamido)-diphenylmethan, 4,4'-Bis-(β-aminocrotonsäurecyclohexylamido)-3,3'-dimethyl-dicyclohexylmethan, N,N'-Bis-(β-aminocrotonyl)-1,3-di-γ-aminopropylen-5,5-dimethylhydantoin.

Als Verbindungen der formel IX seien genannt: N,N'-Bis-(β-aminocrotonyl)-piperazin. N,N'-Bis-(β-aminocrotonyl)-hexahydropyrimidin. N,N'-Bis-(β-aminocrotonyl)-imidazolidin.

Bei dem erfindungsgemässen Verfahren wird im allgemeinen so gearbeitet, dass nur ein bestimmtes β-Aminocrotonsäurederivat und nur ein bestimmtes Polyisocyanat zusammen mit einem bestimmten Polyol eingesetzt werden. Es ist jedoch ebenfalls ohne Nachteil möglich, als Reaktionspartner jeweils Gemische einzusetzen. So können Gemische von verschiedenen β-Aminocrotonsäureestern oder Gemische von verschiedenen β-Aminocrotonsäureamiden verwendet werden. Es können aber auch derartige Ester und Nitrile oder Ester und Amide oder Nitrile und Amide zu entsprechenden Reaktionspartnern gemischt werden. Dasselbe gilt auch für die Polyisocyanate und für Polyole. Es kann auch ein Reaktionspartner ein Gemisch sein und der andere eine reine Substanz.

Im Gegensatz zu dem in der DE-OS 2 633 294 dargelegten Verfahren kann das erfindungsgemässe Verfahren sehr vorteilhaft auch als Giessverfahren durchgeführt werden. Ohne Schwierigkeiten ist jedoch auch ein Arbeiten in Lösung oder ein Arbeiten auf Knetern möglich. Nach bekannten Techniken lassen die Polymere sich zu Lacken und Bindemitteln, sowie Formkörpern, wie Pressmassen, Laminaten oder Produkten, die nach dem Spritzgussverfahren durch Extrudieren oder ähnlichen Verfahren hergestellt werden, verarbeiten. Bevorzugt werden die erfindungsgemässen Polymere zur Herstellung von Formkörpern verwendet.

Die nach dem erfindungsgemässen Verfahren gewonnenen neuen Polymeren zeichnen sich durch erhöhte Wärmeformbeständigkeit aus. Gleichzeitig ist ihre Verarbeitung durch längere Gelierzeiten wesentlich erleichtert gegenüber der Verarbeitung der bekannten Polymere mit hoher Wärmeformbeständigkeit.

Angaben über die Ausgangssubstanzen in den Beispielen

Desmodur N 100 ® (der Bayer AG) ist ein durch Reaktion von Hexamethylendiisocyanat mit Wasser im

Molverhältnis 3 : 1 unter $CO_2$-Abspaltung erhaltenes trimerisiertes Hexamethylendiisocyanat mit einem Isocyanatäquivalentgewicht von ca. 160.

Baymidur K 88 ® (der Bayer AG) ist das Diphenylmethan-4,4'-diisocyanat, welches ein Isocyanatäquivalentgewicht von 130 bis 140 aufweist.

Baygal K 30 ® (der Bayer AG) ist ein verzweigtes Polyätherpolyol mit einem Hydroxyläquivalentgewicht von 105.

Baygal K 55 ® (der Bayer AG) ist ein verzweigtes Polyätherpolyol mit einem Hydroxyläquivalentgewicht von 150.

Desmophen 550 U ® (der Bayer AG) ist ein Polyol mit einem Hydroxyläquivalentgewicht von 148.

Zeolith-L-Paste ® (der Bayer AG) dient als Trockenmittel.

Isophorondiisocyanat steht für 3-Isocyanatomethyl-3,5,5-trimethylcyclohexylisocyanat.

Toluylen-diisocyanat bezeichnet ein Gemisch aus ca. 80 % Methylphenylen-2,4-diisocyanat und ca. 20 % Methylphenylen-2,6-diisocyanat.

Zur Prüfung der neuen Polymere wird die Biegefestigkeit nach VSM 77 105 und die Formbeständigkeit in der Wärme nach ISO/R 75 bestimmt. (VSM ist die Abkürzung für Verein Schweizerischer Maschinenindustrieller, ISO/R die Abkürzung für International Standard Organisation/Recommendation).

In der Tabelle 1 sind die zur Anwendung kommenden ß-Aminocrotonsäurederivate zusammengestellt.

Die folgenden Beispiele erläutern die Erfindung.

Bestimmung der mechanischen Prüfwerte :

Beispiel 1-9

Das Polyol, das ß-Aminocrotonsäurederivat und die Zeolith-L-Paste® (2 Gew.-% bezogen auf das Endgemisch) werden bei ca. 60 °C gemischt und im Vakuum entgast. Anschliessend wird das Isocyanat hinzugefügt, bei ca. 60 °C nochmals gemischt und entgast. Die Badtemperatur kann, je nach Schmelzpunkt des ß-Aminocrotonsäurederivates, über 60 °C liegen und Temperaturen von 80-130 °C erfordern. Die so erhaltenen Schmelzen werden in Formen mit den Innenmassen 140 × 140 × 4 mm gegossen. Durch anschliessendes Erwärmen im Ofen werden die Schmelzen unter Vernetzung in blasenfreie, harte Formkörper übergeführt. Es wird folgender Härtungscyclus angewandt :

Bei tiefschmelzenden Substanzen :
je 2 Stunden bei 60 °C, 80 °C, 100 °C, 120 °C und 140 °C.
Bei hochschmelzenden Substanzen :
je 2 Stunden bei 100 °C, 120 °C und 140 °C.

Vergleichsbeispiele A-D

Das Polyol, das Isocyanat und 2 Gew.-% Zeolith-L-Paste® (bezogen auf das Gesamtgemisch), werden bei Raumtemperatur gemischt und bei maximal 50 °C entgast. Die Mischung wird in Formen mit den Innenmassen 140 × 140 × 4 mm gegossen und durch stufenweises Erwärmen in mehr oder weniger feste Formkörper überführt.

Der Härtungscyclus beträgt :
je 2 Stunden bei 60 °C, 80 °C, 100 °C, 120 °C und 140 °C.

(Siehe Tabellen, Seite 10 ff.)

Tabelle 1

ß-Aminocrotonsäurederivate

| Bezeichnung | Strukturformel des β-Aminocrotonsäurederivates | Entspricht der Formel |
|---|---|---|
| $L^1$ | 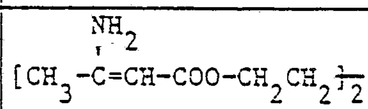 | I |
| $L^2$ | 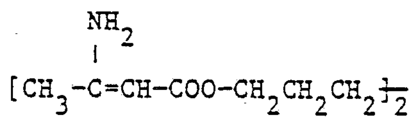 | I |
| $L^3$ | 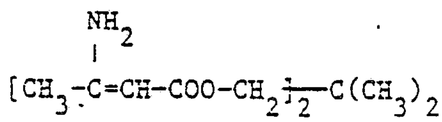 | I |
| $L^4$ | 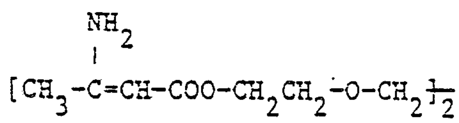 | I |
| $L^5$ | 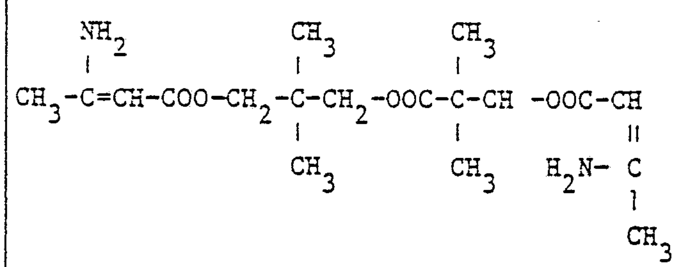 | I |
| $L^6$ | 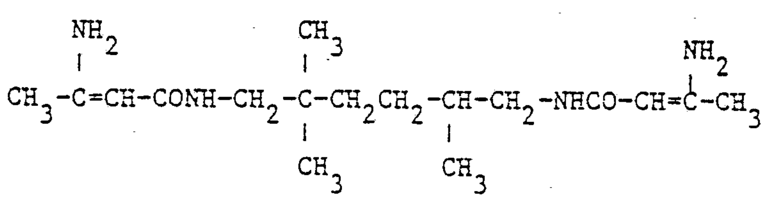 | VII |

Tabelle 2

Mechanische Prüfwerte

| Beispiel | Isocyanat | Polyol | L | Gruppenverhältnis* >N<br>NCO:OH:-C=CH- | Biegefestigkeit $N/mm^2$ | Schlagbiegefestigkeit $KJ/m^2$ | Wärmeformbeständigkeit °C | Glasumwandlungstemperatur °C |
|---|---|---|---|---|---|---|---|---|
| A | Desmodur N 100® | Baygal K 30® | - | 1:1 | 83 | 52 | 55 | 53 |
| 1 | " | " | $L^2$ | 3,9:1,3:1,3 | 110 | 25 | 84 | 88 |
| 2 | " | " | $L^3$ | 3:1:1 | 125 | 33 | 90 | - |
| 3 | " | " | $L^5$ | 3,6:1,3:1,3 | 115 | 51 | 68 | 73 |
| B | Desmodur N 100® | Baygal K 55® | - | 1:1 | 30 | 97 | 42 | 36 |
| 4 | " | " | $L^6$ | 3,7:1,35:1,35 | 124 | 31 | 86 | 80 |
| 5 | " | " | $L^1$ | 3:1:1 | 106 | 80 | 67 | 75 |
| 6 | " | " | $L^1$ | 2:1:1 | 97 | 44 | 57 | 54 |
| C | Baymidur K 88® | Baygal K 55® | - | 1:1 | 110 | 40 | - | 90 |
| 7 | " | " | $L^5$ | 4,2:1,6:1,6 | 147 | 9 | 113 | 120 |
| 8 | " | " | $L^3$ | 3:1:1 | - | - | - | 132 |
| D | Isophorondiisocyanat | Baygal K 30® | | 1:1 | - | - | - | 89 |
| 9 | " | " | $\bar{L}^2$ | 3:1:1 | 47 | - | 94 | 106 |

* Aequivalentverhältnis

Bestimmung der Gelierzeiten :

Beispiele 10-12

Zu diesem Zweck wird eine Mischung, wie in den Beispielen 1-9 hergestellt und die Gelierzeiten bei 120 °C gemessen.

Vergleichsbeispiele F-H

Es werden Mischungen analog den Vergleichsbeispielen A-D hergestellt und die Gelierzeiten bestimmt.

(Siehe Tabelle 3 Seite 13 f.)

Tabelle 3

Gelierzeiten

| Beispiel | Isocyanat | Polyol | L | Gruppenverhältnis NCO:HO:$>N-C=CH-$ | Gelierzeit bei 120°C |
|---|---|---|---|---|---|
| F | Desmodur N 100® | Desmophen 550 U® | – | 1:1 | 4' |
| 10 | " | " | $L^4$ | 2:1:1 | 10' |
| G | Toluylendiisocyanat | Baygal K 55® | – | 1:1 | 1'30'' |
| 11 | " | " | $L^5$ | 2:1:1 | 5'30'' |
| H | Isophorondiisocyanat | Baygal K 30® | – | 1:1 | 9'10'' |
| 12 | " | " | $L^2$ | 3:1:1 | 42' |

**Patentansprüche**

1. Verfahren zur Herstellung von vernetzten, ungesättigten Polymeren, dadurch gekennzeichnet, dass man ein Gemisch, enthaltend im wesentlichen stöchiometrische Mengen eines Di- oder Polyisocyanats und eines Polyols, mit einem monomeren oder oligomeren β-Aminocrotonsäure-ester oder β-Aminocrotonsäurenitril oder β-Aminocrotonsäureamid umsetzt, wobei das Verhältnis der Isocyanat/β-Aminocrotonsäurederivat-Komponenten so gewählt wird, dass auf eine Molekülgruppe der Formel

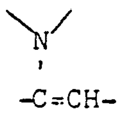

des jeweiligen β-Aminocrotonsäurederivates mindestens eine Isocyanatgruppe kommt.

2. Verfahren nach Anspruch 1, dadurch gekennzeichnet, dass auf eine Molekülgruppe der Formel

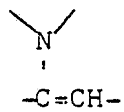

des jeweiligen β-Aminocrotonsäurederivates 1 bis 2 Isocyanatgruppen kommen.

3. Verfahren nach Anspruch 1, dadurch gekennzeichnet, dass man einen β-Aminocrotonsäureester der Formeln I bis III

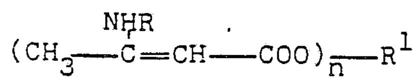 (I)

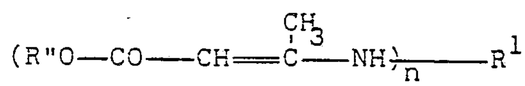 (II)

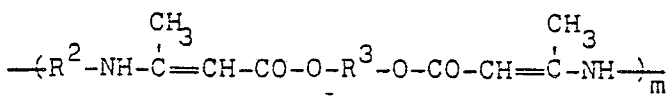 (III)

in denen R ein Wasserstoffatom oder einen gesättigten oder ungesättigten linearen, verzweigten oder cyclischen Kohlenwasserstoffrest mit 1 bis 9 C-Atomen, R″ einen gesättigten oder ungesättigten, linearen, verzweigten oder cyclischen Kohlenwasserstoffrest mit 1 bis 9 C-Atomen bedeuten, n eine der Zahlen 2, 3 oder 4 und m eine Zahl von 4 bis 15 darstellen, $R^1$ einen n-wertigen und $R^2$ und $R^3$ je einen 2-wertigen, gegebenenfalls Aetherbrücken oder COO-Gruppen enthaltenden, linearen, verzweigten oder cyclischen Kohlenwasserstoffrest mit 2 bis 20 C-Atomen oder einen zweiwertigen N-, O- oder S-Atome enthaltenden heterocyclischen Ring bedeuten, wobei $R^2$ und $R^3$ gleich oder verschieden sind, einsetzt.

4. Verfahren nach Anspruch 3, dadurch gekennzeichnet, dass man einen β-Aminocrotonsäureester der Formel I bis III einsetzt, worin R Wasserstoff, R″ $C_1$-$C_4$ Alkyl oder $C_2$-$C_4$ Alkenyl und $R^2$ und $R^3$ je einen 2-wertigen Alkylrest mit 2-9 C-Atomen bedeuten.

5. Verfahren nach Anspruch 3, dadurch gekennzeichnet, dass man einen β-Aminocrotonsäureester der Formel I einsetzt, in denen jeweils n die Zahl 2 und $R^1$ einen 2-wertigen, gegebenenfalls Aetherbrücken oder COO-Gruppen enthaltenden, aliphatischen Rest bedeuten.

6. Verfahren nach Anspruch 5, dadurch gekennzeichnet, dass man einen β-Aminocrotonsäureester der Formel I einsetzt, worin in die Zahl 2 ist und $R^1$ Hexamethylen oder 2,2-Dimethylpropylen bedeutet.

7. Verfahren nach Anspruch 1, dadurch gekennzeichnet, dass man ein β-Aminocrotonsäurenitril der Formeln IV bis VI.

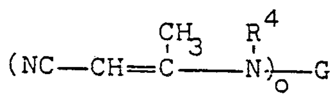 (IV)

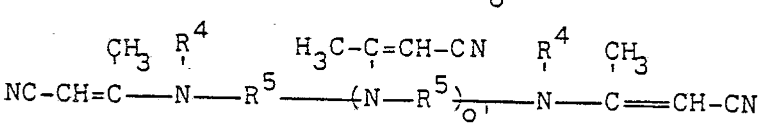 (V)

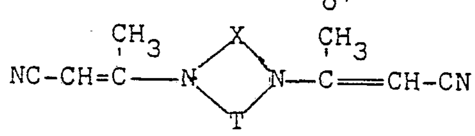 (VI)

in denen $R^4$ ein Wasserstoffatom, Alkyl mit 1 bis 6 C-Atomen, Cycloalkyl mit 5 oder 6 C-Atomen oder Aryl mit 6 bis 10 C-Atomen, o' eine der Zahlen 1, 2 oder 3, o die Zahl 2 oder 3, G einen o-wertigen organischen Rest mit 2 bis 30 C-Atomen und $R^5$ einen zweiwertigen aromatischen oder aliphatischen Rest mit bis zu 30 C-Atomen bedeuten und X und T solche organische Reste darstellen, welche mit den beiden N-Atomen einen 5- oder 6-gliederigen heterocyclischen Ring bilden, einsetzt.

8. Verfahren nach Anspruch 7, dadurch gekennzeichnet, dass man ein β-Aminocrotonsäurenitril der Formeln IV bis VI einsetzt, worin $R^4$ Wasserstoff und $R^5$ einen 2-wertigen Alkylrest mit 2-6 C-Atomen, bedeuten, und X und T mit den beiden N-Atomen einen Piperazin-Ring bilden.

9. Verfahren nach Anspruch 1, dadurch gekennzeichnet, dass man ein β-Aminocrotonsäureamid der Formeln VII bis IX

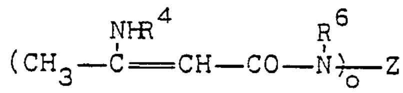
(VII)

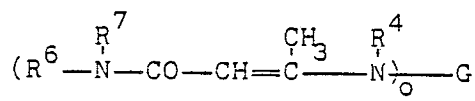
(VIII)

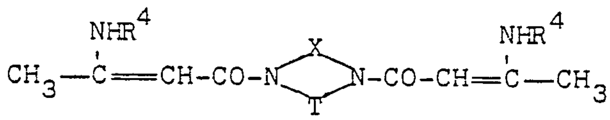
(IX)

in denen $R^4$, $R^6$ und $R^7$ unabhängig voneinander ein Wasserstoffatom, Alkyl mit 1 bis 6 C-Atomen, Cycloalkyl mit 5 bis 6 C-Atomen oder Aryl mit 6 bis 10 C-Atomen, o eine der Zahlen 2 oder 3 und G und Z unabhängig voneinander einen o-wertigen organischen Rest mit 2 bis 30 C-Atomen bedeuten und X und T solche organische Reste darstellen, welche mit den beiden N-Atomen einen 5- oder 6-gliedrigen heterocyclischen Ring bilden, einsetzt.

10. Verfahren nach Anspruch 9, dadurch gekennzeichnet, dass man ein β-Aminocrotonsäureamid der Formeln VII bis IX einsetzt, worin $R^4$ und $R^6$ Wasserstoff und $R^7$ $C_1$-$C_4$ Alkyl, G 4,4'-Diphenylmethan oder Hexamethylen bedeuten, und X und T mit den beiden N-Atomen einen Piperazin-Ring bilden.

11. Verfahren nach Anspruch 9, dadurch gekennzeichnet, dass man ein β-Aminocrotonsäureamid der Formel VII einsetzt, in der jeweils $R^4$ und $R^6$ ein Wasserstoffatom, o die Zahl 2 und Z einen 2-wertigen aliphatischen Rest bedeuten.

12. Verfahren nach Anspruch 11, dadurch gekennzeichnet, dass Z 2,2,5-Trimethylhexamethylen bedeutet.

13. Verfahren nach Anspruch 1, dadurch gekennzeichnet, dass man Isophorondiisocyanat, trimerisiertes Hexamethylendiisocyanat, Diphenylmethan-4,4'-diisocyanat oder Toluylen-diisocyanat einsetzt.

14. Verfahren nach Anspruch 1, dadurch gekennzeichnet, dass man als Polyol ein verzweigtes Polyätherpolyol mit einem Hydroxyäquivalentgewicht von 105 oder 150 einsetzt.

15. Vernetzte, ungesättigte Polymere, erhältlich nach dem Verfahren nach Anspruch 1.

## Claims

1. A process for the preparation of a crosslinked unsaturated polymer, which comprises reacting a mixture, containing substantially stoichiometric amounts of a diisocyanate or polyisocyanate and of a polyol, with a monomeric or oligomeric β-aminocrotonic acid ester or β-aminocrotononitrile or β-aminocrotonamide, the ratio of the isocyanate component of the β-aminocrotonic acid derivative component being chosen so as to provide not less than one isocyanate group per molecular group of the formula

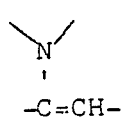

of the particular β-aminocrotonic acid derivative.

2. A process according to claim 1, wherein 1 to 2 isocyanate groups are provided per molecular group of the formula

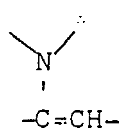

of the particular β-aminocrotonic acid derivative.

3. A process according to claim 1, which comprises the use of a β-aminocrotonic acid ester of one of the formulae I to III

$$(CH_3-\overset{NHR}{C}=CH-COO)_n-R^1 \qquad (I)$$

$$(R''O-CO-CH=\overset{CH_3}{C}-NH)_n-R^1 \qquad (II)$$

$$-(R^2-NH-\overset{CH_3}{C}=CH-CO-O-R^3-O-CO-CH=\overset{CH_3}{C}-NH)_m- \qquad (III)$$

in which R is a hydrogen atom or a saturated or unsaturated linear, branched or cyclic hydrocarbon radical having 1 to 9 C atoms, R″ is a saturated or unsaturated, linear, branched or cyclic hydrocarbon radical having 1 to 9 carbon atoms, n is one of the numbers 2, 3 or 4 and m is a number from 4 to 15 and $R^1$ is an n-valent, and $R^2$ and $R^3$ are each divalent, linear, branched or cyclic hydrocarbon radical which may contain ether bridges or COO groups and has 2 to 20 C atoms, or a divalent heterocyclic ring containing N, O or S atoms, $R^2$ and $R^3$ being identical or different.

4. A process according to claim 3, which comprises the use of a β-aminocrotonic acid ester of one of the formulae I to III, in which R is hydrogen, R″ is $C_1$-$C_4$ alkyl or $C_2$-$C_4$-alkenyl and $R^2$ and $R^3$ are each a divalent alkyl radical having 2-9 C atoms.

5. A process according to claim 3, which comprises the use of a β-aminocrotonic acid ester of the formula I, in which n is the number 2 and $R^1$ is a divalent aliphatic radical which may contain ether bridges or COO groups.

6. A process according to claim 5, which comprises the use of a β-aminocrotonic acid ester of the formula I, in which n is the number 2 and $R^1$ is hexamethylene or 2,2-dimethylpropylene.

7. A process according to claim 1, which comprises the use of a β-aminocrotononitrile of one of the formulae IV to VI

$$(NC-CH=\overset{CH_3}{C}-\overset{R^4}{N})_o-G \qquad (IV)$$

$$NC-CH=\overset{CH_3}{C}-\overset{R^4}{N}-R^5-(\overset{H_3C-C=CH-CN}{N}-R^5)_{o'}-\overset{R^4}{N}-\overset{CH_3}{C}=CH-CN \qquad (V)$$

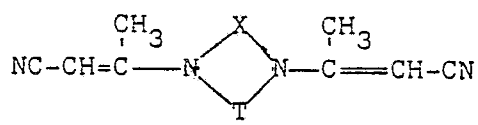

(VI)

in which $R^4$ is a hydrogen atom, alkyl having 1 to 6 C atoms, cycloalkyl having 5 or 6 C atoms or aryl having 6 to 10 C atoms, o′ is one of the numbers 1, 2 or 3, o is one of the numbers 2 or 3, G is an o-valent organic radical having 2 to 30 C atoms and $R^5$ is a divalent aromatic or aliphatic radical having up to 30 C atoms, and X and T are organic radicals which, together with the two N atoms, form a 5-membered or 6-membered heterocyclic ring.

8. A process according to claim 7, which comprises the use of a β-aminocrotononitrile of one of the formula IV to VI, in which $R^4$ is hydrogen and $R^5$ is a divalent alkyl radical having 2-6 C atoms, and X and T form a piperazine ring with the two N atoms.

9. A process according to claim 1, which comprises the use of a β-an tonamide of one of the formulae VII to IX

$$(CH_3-\overset{NHR^4}{C}=CH-CO-\overset{R^6}{N})_o-Z \qquad (VII)$$

$$(R^6-\overset{R^7}{N}-CO-CH=\overset{CH_3}{C}-\overset{R^4}{N})_o-G \qquad (VIII)$$

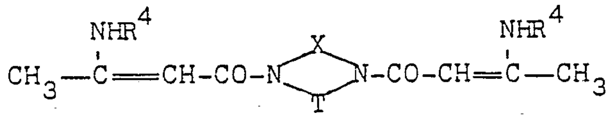 (IX)

in which $R^4$, $R^6$ and $R^7$, independently of one another, are hydrogen, alkyl having 1 to 6 C atoms, cycloalkyl having 5 or 6 C atoms or aryl having 6 to 10 C atoms, o is 2 or 3 and G and Z, independently of one another, are an o-valent organic radical having 2 to 30 C atoms, and X and T are organic radicals which, together with the two N atoms, form a 5-membered or 6-membered heterocyclic ring.

10. A process according to claim 9, which comprises the use of a β-aminocrotonamide of one of the formulae VII to IX, in which $R^4$ and $R^6$ are hydrogen, $R^7$ is $C_1$-$C_4$ alkyl, G is 4,4'-diphenylmethane or hexamethylene and X and T form a piperazine ring with the two N atoms.

11. A process according to claim 9, which comprises the use of a β-aminocrotonamide of the formula VII, in which $R^4$ and $R^6$ are each hydrogen, o is the number 2 and Z is a divalent aliphatic radical.

12. A process according to claim 11, wherein Z is 2,2,5-trimethylhexamethylene.

13. A process according to claim 1, which comprises the use of isophorone diisocyanate, trimerised hexamethylene diisocyanate, diphenylmethane-4,4'-diisocyanate or toluylene diisocyanate.

14. A process according to claim 1, wherein the polyol is a branched polyether-polyol having a hydroxyl equivalent weight of 105 or 150.

15. A crosslinked unsaturated polymer obtainable by a process according to claim 1.

**Revendications**

1. Procédé de fabrication de polymères insaturés réticulés, procédé caractérisé en ce que l'on fait réagir un mélange d'un diisocyanate ou d'un polyisocyanate et d'un polyol dans des proportions stœchiométriques avec un ester, un nitrile ou un amide de l'acide β-amino-crotonique, monomère ou oligomère, en fixant le rapport de l'isocyanate au dérivé de l'acide β-amino-crotonique de manière qu'il y ait au moins un groupe isocyanate par groupe

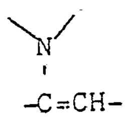

du dérivé d'acide β-amino-crotonique choisi.

2. Procédé selon la revendication 1 caractérisé en ce qu'il y a 1 à 2 groupes isocyanate par groupe de formule

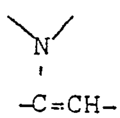

du dérivé d'acide β-amino-crotonique choisi.

3. Procédé selon la revendication 1 caractérisé en ce que l'on part d'un ester β-amino-crotonique répondant à l'une des formules I à III :

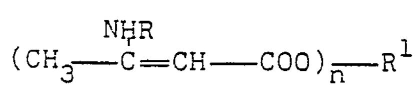 (I)

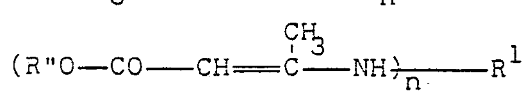 (II)

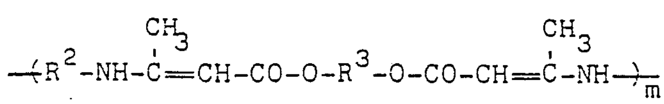 (III)

dans lesquelles R représente un atome d'hydrogène ou un radical hydrocarboné saturé ou insaturé, linéaire, ramifié ou cyclique, en $C_1$ à $C_9$, R" un radical hydrocarboné saturé ou insaturé, linéaire, ramifié ou cyclique, en $C_1$ à $C_9$, n est le nombre 2, 3 ou 4 et m un nombre de 4 à 15, $R^1$ désigne un radical hydrocarboné divalent, linéaire, ramifié ou cyclique, en $C_2$ à $C_{20}$, pouvant éventuellement avoir des ponts d'éther ou des groupes COO, ou bien un radical hétérocyclique divalent avec des atomes d'azote, d'oxygène ou de soufre, $R^2$ et $R^3$ pouvant être identiques ou différents l'un de l'autre.

4. Procédé selon la revendication 3, caractérisé en ce que l'on part d'un ester β-amino-crotonique de

l'une des formules I à III précédentes, dans lequel R est l'hydrogène, R" un alkyle en $C_1$-$C_4$ ou un alcényle en $C_2$-$C_4$ et $R^2$ et $R^3$ sont chacun un alkylène en $C_2$ à $C_9$.

5. Procédé selon la revendication 3, caractérisé en ce que l'on part d'un ester β-amino-crotonique de formule I dans lequel n est le nombre 2 et $R^1$ un radical aliphatique divalent avec éventuellement des ponts d'éther ou des groupes COO.

6. Procédé selon la revendication 5, caractérisé en ce que l'on part d'un ester β-amino-crotonique de formule I dans lequel n est le nombre 2 et $R^1$ le groupe hexaméthylène ou 2,2-diméthylpropylène.

7. Procédé selon la revendication 1, caractérisé en ce que l'on part d'un nitrile d'acide β-amino-crotonique de l'une des formules IV à VI

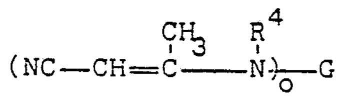
(IV)

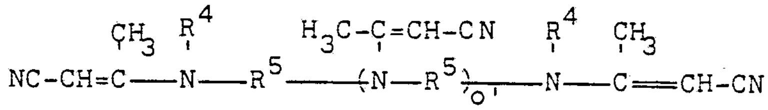
(V)

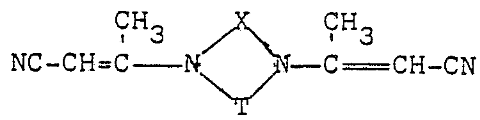
(VI)

dans lesquelles $R^4$ est un atome d'hydrogène, un alkyle en $C_1$-$C_6$, un cycloalkyle en $C_5$ ou $C_6$ ou un aryle en $C_6$ à $C_{10}$, o' le nombre 1, 2 ou 3, o le nombre 2 ou 3, G un radical organique en $C_2$ à $C_{30}$ de valence o et $R_5$ un radical aromatique ou aliphatique divalent pouvant avoir jusqu'à 30 atomes de carbone, et X et T représentent des radicaux organiques formant avec les deux atomes d'azote un hétérocycle pentagonal ou hexagonal.

8. Procédé selon la revendication 7, caractérisé en ce que l'on part d'un nitrile β-amino-crotonique de l'une des formules IV à VI dans lequel $R^4$ est l'hydrogène et $R^5$ un alkylène en $C_2$ à $C_6$, et X et T forment avec les deux atomes d'azote un cycle de pipérazine.

9. Procédé selon la revendication 1, caractérisé en ce que l'on part d'un amide β-amino-crotonique de l'une des formules VII à IX

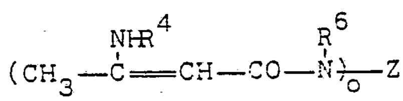
(VII)

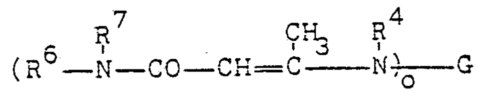
(VIII)

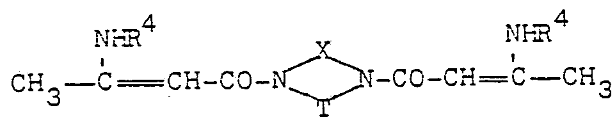
(IX)

dans lesquelles $R^4$, $R^6$ et $R^7$ désignent chacun, indépendamment l'un de l'autre, un atome d'hydrogène, un alkyle en $C_1$-$C_6$, un cycloalkyle en $C_5$ ou $C_6$ ou un aryle en $C_6$-$C_{10}$, o est le nombre 2 ou 3 et G et Z désignent chacun, indépendamment l'un de l'autre, un radical organique de valence o en $C_2$ à $C_{30}$, et X et T sont des radicaux organiques formant avec les deux atomes d'azote un hétérocycle pentagonal ou hexagonal.

10. Procédé selon la revendication 9, caractérisé en ce que l'on part d'un amide β-amino-crotonique de l'une des formules VII à IX dans lequel $R^4$ et $R^6$ sont chacun l'hydrogène, $R^7$ est un alkyle en $C_1$-$C_4$, G le radical 4,4'-diphénylméthane ou hexaméthylène et X et T forment avec les deux atomes d'azote un cycle de pipérazine.

11. Procédé selon la revendication 9, caractérisé en ce que l'on part d'un amide β-amino-crotonique de formule VII dans lequel $R^4$ et $R^6$ sont chacun l'hydrogène, o le nombre 2 et Z un radical aliphatique divalent.

12. Procédé selon la revendication 2, caractérisé en ce que Z est le groupe 2,2,5-triméthylhexaméthylène.

13. Procédé selon la revendication 1, caractérisé en ce que l'on part du diisocyanate d'isophorone, du trimère du diisocyanate d'hexaméthylène, du 4,4'-diisocyanato-diphénylméthane ou du diisocyanate de toluylène.

14. Procédé selon la revendication 1, caractérisé en ce que l'on prend comme polyol un polyétherpolyol ramifié ayant un poids équivalent d'hydroxyle de 105 à 150.

15. Les polymères insaturés réticulés qui ont été obtenus par un procédé selon l'une quelconque des revendications précédentes.